# EUROPEAN PATENT SPECIFICATION

(11) **EP 3 564 564 B1**
(45) Date of publication and mention of the grant of the patent: **27.03.2024**
(21) Application number: 19159821.8
(22) Date of filing: 27.02.2019
(51) Int. Cl.: F16L 3/23, B60H 1/00, F16L 57/06

(54) **VEHICLE AIR CONDITION SERVICE UNIT COMPRISING A HOSE ASSEMBLY**
FAHRZEUGKLIMAANLAGENWARTUNGSEINHEIT UMFASSEND EINE SCHLAUCHANORDNUNG
UNITÉ DE SERVICE DE CONDITIONNEMENT D'AIR POUR VÉHICULE COMPRENANT UN ENSEMBLE DE TUYAU

(30) Priority: 03.05.2018 DE 102018206854
(43) Date of publication of application: 06.11.2019
(73) Proprietor: Dometic Sweden AB, 171 54 Solna (SE)
(72) Inventor: Esch, Franz-Josef, 48477 Hörstel (DE)
(74) Representative: Grosse, Felix Christopher

(56) References cited:
- US-A- 2 708 833
- US-A- 2 708 835
- US-A1- 2006 130 510
- US-A1- 2012 318 005

## Description

The present invention is directed to a vehicle air condition service unit comprising a hose assembly. In general, such hose assemblies are used together with an air condition service unit to perform service work and maintenance on automotive air conditioners.

In general, such vehicle air condition service units are used to exchange the refrigerant of a vehicle air condition system. For doing so, the air condition service unit comprises a high-pressure hose and a low-pressure hose which are connected to the respective input ports of the vehicle air condition system via connectors or fittings. The refrigerant can for instance be R744, that means a CO₂ based refrigerant.

Such a service unit is disclosed, for example, in US 2006/130510 A1, which discloses a refrigerant recovery unit for maintenance of a cooling system of a vehicle, which is adapted to receive different modules to add functionality to the recovery system, one of them being a recovery circuit comprising a high pressure hose with a coupling, which may be coupled to a vehicle's high pressure port and a low pressure hose having a coupling, which may be coupled to a low pressure port of the vehicle's refrigerant circuit.

The effective diameters of the pressure hoses used in general are about 2 mm to 4 mm. Commonly, the pressure hoses have a length of about 2 m to 8 m. Further, the pressure hoses are flexible to a certain degree and are equipped with bend protection. The rather small diameters of the pressure hoses warrant that a filling accuracy of about 10g refrigerant can be achieved. During operation of the vehicle air condition service unit the pressure within the pressure hoses - and especially within the high-pressure hose - can rise up to 17 MPa (170 bar) wherein the bursting pressure can even be up to 136 MPa (1360 bar), so that any malfunction should under all means be avoided.

A certain origin of danger is the transition between the pressure hose and the connector on the air condition side, that means at the vehicle. In general, the connector is a metal threading valve the hose is fitted to. In case the pressure hose skids off the connector or breaks close to the connector during operation, the hose accidentally starts whipping at a high velocity due to the high pressure prevailing within the pressure hose. This whipping movement of the hose can cause injury to any person being close by, in particular the operator of the vehicle air condition service unit.

Thus, it is an object of the present invention to provide a hose assembly for a vehicle air condition service unit which greatly reduces the risk of injuries caused by a separation or breaking of one of the pressure hoses during operation of the air condition service unit.

The problem is solved with a vehicle air condition service unit comprising a hose assembly according to claim 1. Preferred embodiments are described in the dependent claims.

The hose assembly according to claim 1 has an air condition side and a service unit side. The hose assembly comprises a high-pressure hose and a low-pressure hose. The high-pressure hose has a first air condition connector at a first end at the air condition side and a first service unit connector at a second end at the service unit side. The low-pressure hose has a second air condition connector at a first end at the air condition side and a second service unit connector at a second end at the service unit side.

During operation the first and second service unit connectors are connected to the respective pressure ports of the air condition service unit while the first and second air condition connectors are connected to the vehicle air condition system.

The hose assembly according to the present invention further comprises a security cable having an air condition attachment member at a first end at the air condition side and a service unit attachment member at a second end at the service unit side. The air condition attachment member being configured to be releasably engaged with a suitable support. A suitable support may be any structure at the air condition side. Preferably, the suitable support is a structure which is rigidly fixed, like a part of the vehicle the air condition service is carried out on.

In addition, the hose assembly according to the present invention further comprises a sheath member sheathing the high-pressure hose, the low-pressure hose and the security cable at least partially between the air conditioning side and the service unit side. Hence, the sheath member encases the high-pressure hose, the low-pressure hose and the security cable together, so that relative movement of the high-pressure hose and the low-pressure hose relative to the security cable is limited, as the air condition attachment member and the service unit attachment member hinder the security cable to whip together with the damaged hose.

In case one of the hoses separates from the respective connector or is teared, the whipping movement of the hose is greatly limited. Assuming that the high-pressure hose skips off from the first air condition connector, the whipping movement of the high-pressure hose is restricted to a small portion of the high-pressure hose. In general, it is thus preferably that the sheath member sheaths as much of the high-pressure hose and the low-pressure hose together with the security cable as possible. Of course, the sheath member can also comprise of several portions which do not necessarily need to form a continuous sheath member.

Preferably, the sheath member is a flexible tubular member extending between the air conditioning side and the service unit side. Thus, the high-pressure hose, the low-pressure hose and the security cable are sheathed largely along their longitudinal extent so that a respective whipping movement is greatly minimized. Besides, as the sheath member is a flexible member, a certain resistance to an external force can be achieved, hence hindering a corruption of the sheath member which might in turn again reduce the safety.

Preferably, the air condition attachment member comprises a carabiner. This allows for a convenient attachment of the air condition attachment member to the respective suitable support. The suitable support is preferably provided on the vehicle.

Preferably, the sheath member has a first end at the air conditioning side, wherein the high-pressure hose and the low-pressure hose each have having a non- sheathed portion extending from the first end of the sheath member. Thus, this allows for convenient attachment of the first and second air condition connectors to the vehicle's air condition system.

In this regard, it is preferable when the non- sheathed portions of the high-pressure hose and the low-pressure hose have a length of at least 100 mm, preferably of about 150 mm. This length is sufficient to allow for a convenient attachment of the first and second air condition connectors, whilst still maintaining the advantage of a greatly reduced whipping movement in case of damage or tearing off one of the pressure hoses.

Further, it is preferable when the security cable has a non- sheathed portion extending from the first end of the sheath member, wherein the length of the non- sheathed portion of the security cable is at least 250 mm, preferably 500 mm. Thus, the security cable is of sufficient length to be engaged with a suitable support, which is not necessarily located in close proximity to the respective pressure ports the first and second air condition connectors are attached to. In addition, the length of the security cable is in a range which greatly suppresses whipping movement of a damaged pressure hose in case of malfunction.

Preferably, the security cable is a flexible wire rope with a plastic cover. This inhibits abrasion at the sheath member, the low-pressure hose or the high-pressure hose due to relative movement between the individual members. Further, the security cable does not cause any damage at the vehicle when being attached thereto, like paint scratches.

According to the invention, the service unit attachment member is fixed to the service unit, and the first service unit connector and the second service unit connector are connected to respective pressure ports.

Next, a preferred embodiment of the invention will be described with reference to the drawings, wherein
- Fig.1: is a partially cut out perspective view of an air condition service unit comprising an inventive hose assembly; and
- Fig.2: is side view of an inventive service hose assembly.

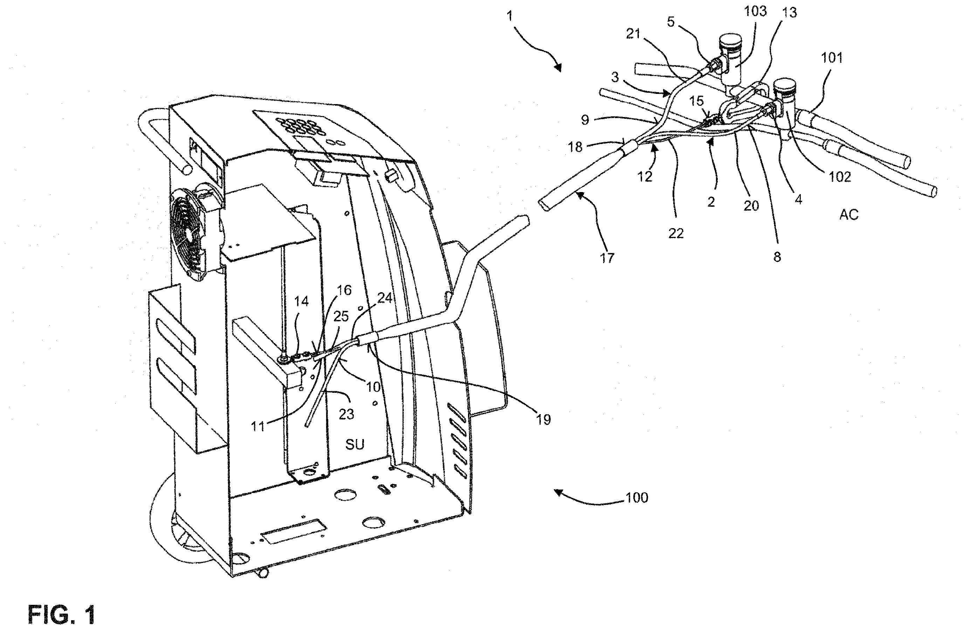

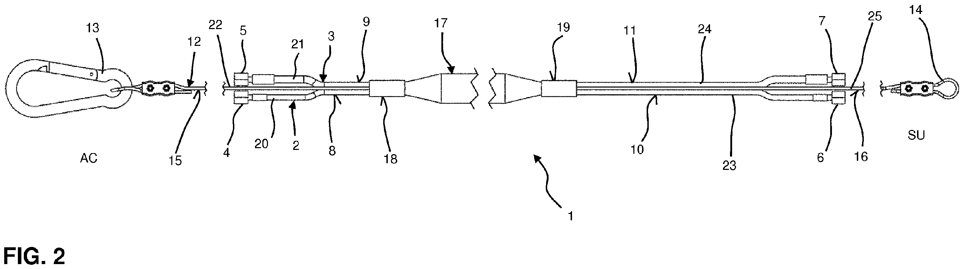

Fig. 1 shows a partially cut out perspective view of an air condition service unit 100. The air condition service unit 100 comprises a hose assembly 1. The hose assembly 1 has a service unit side SU and a vehicle air condition side AC. As can be seen from Fig. 2, the hose assembly 1 comprises of a high-pressure hose 2, a low-pressure hose 3 and security cable 12.

The high-pressure hose 2 has a first air condition connector 4 at a first end 8, which is provided at the air condition side AC. As shown in in Fig. 1, the first air condition connector 4 is connected to a respective pressure port 102 of the vehicle air condition system. At a second end 10 of the high-pressure hose 2 at the service unit side SU there is provided a first service unit connector 6, which is to be connected to respective pressure port of the service unit 100.

The low-pressure hose 3 has a second air condition connector 5 at a first end 9 at the air condition side AC. The second air condition connector 5 is connected to a respective pressure port 103 of the vehicle air condition system, as shown in Fig. 1. The low-pressure hose 3 further has a second service unit connector 7 at a second end at the service unit side SU. The second service unit connector 7 is to be connected to a respective pressure port of the service unit 100. In Fig. 1 the first and second service unit connectors 6, 7 are not shown for lucidity reasons.

The security cable 12 comprises a first end 15 at the air condition side AC and a second end 16 at the service unit side SU. At the first end 15 of the security cable 12 there is provided an air condition attachment member 13. In the embodiment shown in Fig. 1, the air condition attachment member 13 comprises a carabiner, which can releasably be engaged with a suitable support 101 provided at the vehicle. As shown in Fig. 1, the support 101 is a part of the vehicle's air condition system, namely the low-pressure line. However, the carabiner 13 can also to be attached to any other suitable support 101, for example a part of the vehicle's frame. To avoid damage to the vehicle like paint scratches, the security cable 12 is a flexible wire rope with a plastic cover. Thus, even in case the security cable 12 rides along other parts of the vehicle, the risk of damage is only minute.

At the second end 16 of the security cable 12 there is provided a service unit attachment member 14. In the embodiment shown in Fig. 1 the service unit attachment member 14 comprises a wire rope clip and is fixedly attached to the service unit 100, for example by means of a screw. Of course, the wire rope clip 14 can also be attached to the service unit 100 differently, as long as it is attached permanently.

Furthermore, the hose assembly 1 comprises a sheath member 17 in form of a flexible tubular member extending between the air condition side AC and the service unit side SU. The sheath member 17 sheaths the high-pressure hose 2, the low-pressure hose 3 and the security cable 12. Thus, the high-pressure hose 2, the low-pressure hose 3 and the security cable 12 are arranged to be encased by the sheath member 17 along a substantial part of their entire length. In the embodiment shown, the sheath member 17 is a continuous sheath member 17.

The sheath member 17 comprises a first end 18 at the air condition side AC and a second end 19 at the service unit side SU. The high-pressure hose 2 has a non- sheathed portion 20 extending from the first end 18 of the sheath member 17. This non- sheathed portion 20 of the high-pressure hose 3 at the air condition side AC has a length of about 100 mm to 200 mm. Preferably, the non- sheathed portion 20 of the high-pressure hose 2 at the air condition side AC has a length of 150 mm. This allows for a convenient attachment of the first air condition connector 4 to the respective pressure port of the vehicle's air condition system. Accordingly, the high-pressure hose 2 further has a non- sheathed portion 23 extending from the second end 19 of the sheath member 17 at the service unit side SU. This non- sheathed portion 23 of the high-pressure hose 2 at the service unit side SU has a length of about 200 mm to 400 mm. Preferably, the non- sheathed portion 23 of the high-pressure hose 2 at the service unit side SU has a length of 300 mm. This allows for a convenient attachment of the first service unit connector 6 to the respective pressure port of the service unit 100.

The low-pressure hose 3 has a non- sheathed portion 21 extending from the first end 18 of the sheath member 17. This non- sheathed portion 21 of the low-pressure hose 3 at the air condition side AC has a length of about 100 mm to 200 mm. Preferably, the non- sheathed portion 21 of the low-pressure hose 2 at the air condition side AC has a length of 150 mm. This allows for a convenient attachment of the second air condition connector 5 to the respective pressure port of the vehicle's air condition system. Accordingly, the low-pressure hose 3 further has a non- sheathed portion 25 extending from the second end 19 of the sheath member 17 at the service unit side SU. This non- sheathed portion 25 of the low-pressure hose 3 at the service unit side SU as a length of about 200 mm to 400 mm.

Preferably, the non- sheathed portion 25 of the low-pressure hose 3 at the service unit side SU has a length of 300 mm. This allows for a convenient attachment of the second service unit connector 7 to the respective pressure port of the service unit 100.

The security cable 12 has a non- sheathed portion 22 extending from the first end 18 of the sheath member 17. The non- sheathed portion 22 of the security cable 12 at the air condition side AC has a length up to a wire rope clip at the first end of the security cable 15 of about 400 mm to 600 mm and preferably of about 500 mm. Thus, the carabiner 13 can conveniently be attached to the support 101 without the danger of stretching the high-pressure hose 2, the low-pressure hose 3 or the sheath member 17. In addition, the security cable 12 has a non- sheathed portion 25 extending from the second end 19 of the sheath member 17 at the service unit side SU. Here, the non- sheathed portion 25 of the security cable 12 at the service unit side SU has a length up to the service unit attachment member 14 of about 200 mm to 450 mm, and preferably of about 320 mm. Thus, the service unit attachment member 14 can conveniently be rigidly fixed to a respective portion of the service unit 100.

When the hose assembly 1 is installed and the first air condition connector 4 and the second air condition connector 5 are attached to the vehicle's air condition system, the operator attaches the carabiner 13 to a suitable support 101 prior to starting air condition service. In case of malfunction, damage or tearing of one of the high-pressure hose 2 or the low-pressure hose 3, the security cable 12 in combination with the sheath member 17 inhibits whipping of the damaged hose 2, 3, as the carabiner 13 and the service unit attachment member 14 cannot separate from the support 101 or the service unit 100 respectively. In particular, the whipping movement of the respective damaged hose 2, 3 is limited to the respective non- sheathed portion 20, 21, 23, 25. Thus, the danger of injury for the operator is greatly reduced.

### LIST OF REFERENCE SIGNS

- 1: hose assembly
- 2: high pressure hose
- 3: low pressure hose
- 4: first air condition connector
- 5: second air condition connector
- 6: first service unit connector
- 7: second service unit connector
- 8: first end of high pressure hose
- 9: first end of low pressure hose
- 10: second end of high pressure hose
- 11: second end of low pressure hose
- 12: security cable
- 13: air condition attachment member
- 14: service unit attachment member
- 15: first end of security cable
- 16: second end of security cable
- 17: sheath member
- 18: first end of sheath member
- 19: second end of sheath member
- 20: non- sheathed portion of high pressure hose at first end
- 21: non- sheathed portion of low pressure hose at first end
- 22: non- sheathed portion of security cable at first end
- 23: non- sheathed portion of high pressure hose at second end
- 24: non- sheathed portion of low pressure hose at second end
- 25: non- sheathed portion of security cable at second end
- 100: air condition service unit
- 101: support
- 102: pressure port (high pressure)
- 103: pressure port (low pressure)
- AC: air condition side
- SU: service unit side

## Claims

1. Vehicle air condition service unit (100) comprising a hose assembly (1), the hose assembly having an air condition side (AC) and a service unit side (SU) and comprising
a high-pressure hose (2) having a first air condition connector (4) at a first end (8) at the air condition side (AC) and a first service unit connector (6) at a second end (10) at the service unit side (SU),
a low-pressure hose (3) having a second air condition connector (5) at a first end (9) at the air condition side (AC) and a second service unit connector (7) at a second end (11) at the service unit side (SU),
**characterized by**
a security cable (12) having an air condition attachment member (13) at a first end (15) at the air condition side (AC) and a service unit attachment member (14) at a second end (16) at the service unit side (SU), the air condition attachment member (13) being configured to be releasably engaged with a suitable support (101),
wherein the hose assembly further comprises a sheath member (17) sheathing the high-pressure hose (2), the low-pressure hose (3) and the security cable (12) at least partially between the air conditioning side (AC) and the service unit side (SU),
wherein the service unit attachment member (14) is fixed to the service unit (100), and wherein the first service unit connector (6) and the second service unit connector (7) are connected to respective pressure ports of the air condition service unit (100).

2. Vehicle air condition service unit (100) according to claim 1, wherein
the sheath member (17) is a flexible tubular member extending between the air conditioning side (AC) and the service unit side (SU).

3. Vehicle air condition service unit (100) according to claim 1 or 2, wherein
the air condition unit attachment member (13) comprises a carabiner.

4. Vehicle air condition service unit (100) according to any of the preceding claims, wherein
the sheath member (17) has a first end (18) at the air conditioning side (AC), wherein the high-pressure hose (2) and the low-pressure hose (3) each have a non- sheathed portion (20, 21) extending from the first end (18) of the sheath member (17).

5. Vehicle air condition service unit (100) according to claim 4, wherein
the non- sheathed portions (20, 21) of the high-pressure hose (2) and the low-pressure hose (3) have a length of at least 100 mm, preferably of about 150 mm.

6. Vehicle air condition service unit (100) according to claim 4 or 5, wherein
the security cable (12) has a non- sheathed portion (22) extending from the first end (18) of the sheath member (18), wherein the length of the non- sheathed portion (22) of the security cable (17) is at least 250 mm, preferably 500 mm.

7. Vehicle air condition service unit (100) according to any one of the preceding claims, wherein the security cable (12) is a flexible wire rope with a plastic cover.

8. Vehicle air condition service unit (100) according to any one of the preceding claims, wherein the service unit attachment member (14) comprises a wire rope clip.

9. Vehicle air condition service unit (100) according to any one of the preceding claims, wherein the sheath member (17) has a second end (19) at the service unit side (SU), wherein the high-pressure hose (2), the low-pressure hose (3) and the security cable (12) each having a non-sheathed portion (23, 24, 25) extending from the second (19) end of the sheath member (17).

## Patentansprüche

1. Fahrzeug-Klimaanlagen-Wartungseinheit (100), aufweisend eine Schlauchleitungsbaueinheit (1), wobei die Schlauchleitungsbaueinheit über eine Klimaanlagen-Seite (AC) und eine Wartungseinheit-Seite (SU) verfügt und folgendes aufweist:
einen Hochdruckschlauch (2) mit einem ersten Klimaanlagen-Verbindungsstück (4) an einem ersten Ende (8) auf der Klimaanlagen-Seite (AC) und einem ersten Wartungseinheit-Verbindungsstück (6) an einem zweiten Ende (10) auf der Wartungseinheit-Seite (SU),
einen Niederdruckschlauch (3) mit einem zweiten Klimaanlagen-Verbindungsstück (5) an einem ersten Ende (9) auf der Klimaanlagen-Seite (AC) und einem zweiten Wartungseinheit-Verbindungsstück (7) an einem zweiten Ende (11) auf der Wartungseinheit-Seite (SU),
**gekennzeichnet durch**
ein Sicherungskabel (12) mit einem Klimaanlagen-Befestigungsbauteil (13) an einem ersten Ende (15) auf der Klimaanlagen-Seite (AC) und einem Wartungseinheit-Befestigungsbauteil (14) an einem zweiten Ende (16) auf der Wartungseinheit-Seite (SU), wobei das Klimaanlagen-Befestigungsbauteil (13) so ausgebildet ist, dass es lösbar in einen geeigneten Träger (101) greift,
wobei die Schlauchleitungsbaueinheit ferner ein Mantelbauteil (17) aufweist, das den Hochdruckschlauch (2), den Niederdruckschlauch (3) und das Sicherungskabel (12) zwischen der Klimaanlagen-Seite (AC) und der Wartungseinheit-Seite (SU) wenigstens teilweise ummantelt,
wobei
das Wartungseinheit-Befestigungsbauteil (14) an der Wartungseinheit (100) befestigt ist, und wobei das erste Wartungseinheit-Verbindungsstück (6) und das zweite Wartungseinheit-Verbindungsstück (7) an jeweilige Druckanschlüsse der Klimaanlagen-Wartungseinheit (100) angeschlossen sind.

2. Fahrzeug-Klimaanlagen-Wartungseinheit (100) gemäß Anspruch 1, wobei
das Mantelbauteil (17) ein flexibles röhrenförmiges Bauteil ist, das zwischen der Klimaanlagen-Seite (AC) und der Wartungseinheit-Seite (SU) verläuft.

3. Fahrzeug-Klimaanlagen-Wartungseinheit (100) gemäß Anspruch 1 oder 2, wobei
das Klimaanlagen-Befestigungsbauteil (13) einen Karabiner aufweist.

4. Fahrzeug-Klimaanlagen-Wartungseinheit (100) gemäß einem der vorhergehenden Ansprüche, wobei
das Mantelbauteil (17) über ein erstes Ende (18) auf der Klimaanlagen-Seite (AC) verfügt, wobei der Hochdruckschlauch (2) und der Niederdruckschlauch (3) jeweils über einen nicht ummantelten Abschnitt (20, 21) verfügen, der ausgehend von dem ersten Ende (18) des Mantelbauteils (17) verläuft.

5. Fahrzeug-Klimaanlagen-Wartungseinheit (100) gemäß Anspruch 4, wobei
die nicht ummantelten Abschnitte (20, 21) des Hochdruckschlauchs (2) und des Niederdruckschlauchs (3) eine Länge von wenigstens 100 mm, vorzugsweise etwa 150 mm haben.

6. Fahrzeug-Klimaanlagen-Wartungseinheit (100) gemäß Anspruch 4 oder 5, wobei
das Sicherungskabel (12) über einen nicht ummantelten Abschnitt (22) verfügt, der ausgehend von dem ersten Ende (18) des Mantelbauteils (17) verläuft, wobei die Länge des nicht ummantelten Abschnitts (22) des Sicherungskabels (12) wenigstens 250 mm, vorzugsweise 500 mm beträgt.

7. Fahrzeug-Klimaanlagen-Wartungseinheit (100) gemäß einem der vorhergehenden Ansprüche, wobei
das Sicherungskabel (12) ein flexibles Drahtseil mit einer Kunststoffabdeckung ist.

8. Fahrzeug-Klimaanlagen-Wartungseinheit (100) gemäß einem der vorhergehenden Ansprüche, wobei
das Wartungseinheit-Befestigungsbauteil (14) eine Drahtseilklemme aufweist.

9. Fahrzeug-Klimaanlagen-Wartungseinheit (100) gemäß einem der vorhergehenden Ansprüche, wobei
das Mantelbauteil (17) über ein zweites Ende (19) auf der Wartungseinheit-Seite (SU) verfügt, wobei der Hochdruckschlauch (2), der Niederdruckschlauch (3) und das Sicherungskabel (12) jeweils über einen nicht ummantelten Abschnitt (23, 24, 25) verfügen, der ausgehend von dem zweiten Ende (19) des Mantelbauteils (17) verläuft.

## Revendications

1. Unité de service (100) de climatiseur de véhicule comprenant un ensemble de tuyau (1), ledit ensemble de tuyau ayant un côté climatiseur (AC) et un côté unité de service (SU) et comprenant
un tuyau à haute pression (2) comprenant un premier connecteur de climatiseur (4) sur une première extrémité (8) du côté climatiseur (AC) et un premier connecteur d'unité de service (6) sur une deuxième extrémité (10) du côté unité de service (SU),
un tuyau à basse pression (3) comprenant un deuxième connecteur de climatiseur (5) sur une première extrémité (9) du côté climatiseur (AC) et un deuxième connecteur d'unité de service (7) sur une deuxième extrémité (11) du côté unité de service (SU),
**caractérisée par**
un câble de sécurité (12) comprenant un élément de fixation de climatiseur (13) sur une première extrémité (15) du côté climatiseur (AC) et un élément de fixation d'unité de service (14) sur une deuxième extrémité (10) du côté unité de service (SU), ledit élément de fixation de climatiseur (13) étant configuré pour être engagé de façon amovible avec un support approprié (101),
ledit ensemble de tuyau comprenant en outre un élément de gaine (17) enveloppant ledit tuyau à haute pression (2), ledit tuyau à basse pression (3) et ledit câble de sécurité (12) au moins en partie entre le côté climatiseur (AC) et le côté unité de service (SU),
ledit élément de fixation d'unité de service (14) étant fixé audit unité de service (100), et le premier connecteur d'unité de service (6) et le deuxième connecteur d'unité de service (7) étant connectés à des raccords de pression respectifs dudit unité de service de climatiseur (100).

2. Unité de service (100) de climatiseur de véhicule selon la revendication 1, dans laquelle
ledit élément de gaine (17) est un élément tubulaire flexible s'étendant entre le côté climatiseur (AC) et le côté unité de service (SU).

3. Unité de service (100) de climatiseur de véhicule selon la revendication 1 ou 2, dans laquelle ledit élément de fixation de climatiseur (13) comprend un mousqueton.

4. Unité de service (100) de climatiseur de véhicule selon l'une quelconque des revendications précédentes, dans laquelle
ledit élément de gaine (17) comprend une première extrémité (18) du côté climatiseur (AC), ledit tuyau à haute pression (2) et ledit tuyau à basse pression (3) présentant, chacun, une partie non-enveloppée (20, 21) s'étendant à partir de la première extrémité (18) dudit élément de gaine (17).

5. Unité de service (100) de climatiseur de véhicule selon la revendication 4, dans laquelle
les parties non-enveloppées (20, 21) dudit tuyau à haute pression (2) et dudit tuyau à basse pression (3) ont une longueur d'au moins 100 mm, de préférence d'environ 150 mm.

6. Unité de service (100) de climatiseur de véhicule selon la revendication 4 ou 5, dans laquelle ledit câble de sécurité (12) présente une partie non-enveloppée (22) s'étendant à partir de la première extrémité (18) dudit élément de gaine (17), la partie non-enveloppée (22) dudit câble de sécurité (12) étant d'une longueur de 250 mm, de préférence de 500 mm.

7. Unité de service (100) de climatiseur de véhicule selon l'une quelconque des revendications précédentes, dans laquelle
ledit câble de sécurité (12) est un câble métallique flexible comportant un revêtement en plastique.

8. Unité de service (100) de climatiseur de véhicule selon l'une quelconque des revendications précédentes, dans laquelle
ledit élément de fixation d'unité de service (14) comprend une attache de câble métallique.

9. Unité de service (100) de climatiseur de véhicule selon l'une quelconque des revendications précédentes, dans laquelle
ledit élément de gaine (17) comprend une deuxième extrémité (19) du côté unité de service (SU), ledit tuyau à haute pression (2), ledit tuyau à basse pression (3) et ledit câble de sécurité (12) présentant, chacun, une partie non-enveloppée (23, 24, 25) s'étendant à partir de la deuxième extrémité (19) dudit élément de gaine (17).
